# EUROPÄISCHE PATENTSCHRIFT

(11) **EP 1 929 253 B1**
(45) Veröffentlichungstag und Bekanntmachung des Hinweises auf die Patenterteilung: **22.12.2010**
(21) Anmeldenummer: 06805749.6
(22) Anmeldetag: 18.09.2006
(51) Int. Cl.: G01F 15/02, G05D 7/06, G01F 3/00, G01F 11/00

(54) **VERFAHREN ZUR STEUERUNG EINER DOSIEREINRICHTUNG FÜR FLÜSSIGE ODER PASTEUSE MEDIEN**
METHOD FOR CONTROLLING A DOSING APPARATUS FOR LIQUID OR PASTY MEDIA
PROCEDE POUR COMMANDER UN DISPOSITIF DE DOSAGE POUR DES MILIEUX LIQUIDES OU PATEUX

(30) Priorität: 19.09.2005 DE 102005044796
(43) Veröffentlichungstag der Anmeldung: 11.06.2008
(73) Patentinhaber: Hilger u. Kern GmbH, D-68167 Mannheim (DE)
(72) Erfinder: GEIER, Daniel, D-68782 Brühl (DE); EHRLE, Klaus, 68642 Bürstadt (DE)
(74) Vertreter: Kesselhut, Wolf
(86) Internationale Anmeldenummer: PCT/EP2006/009055
(87) Internationale Veröffentlichungsnummer: WO 2007/033808

(56) Entgegenhaltungen:
- EP-A1- 0 116 879
- DE-T2- 69 814 532
- DE-U1- 29 606 710
- GB-A- 2 185 785

## Beschreibung

Die Erfindung betrifft ein Verfahren zur Steuerung einer Dosiereinrichtung für flüssige oder pasteuse Medien, sowie einen Industrieroboter mit einer solchen Dosiereinrichtung, gemäß dem Oberbegriff von Anspruch 1, 11 und 15.

Dosiereinrichtungen zur Feindosierung von flüssigen oder pasteusen Medien, wie beispielsweise Klebstoffen, Dichtstoffen oder sonstigen in der industriellen Fertigung eingesetzten Flüssigkeiten oder Gelen, sind auf dem Stand der Technik bekannt. Die bekannten Dosiereinrichtungen umfassen dabei üblicher Weise eine Dosierpumpe in Form einer Zahnradpumpe, die über einen drehzahlgeregelten Motor angetrieben wird, und der das zu dosierende Medium über eine Zuführeinrichtung, z.B. in Form eines Vorratsbehälters, über eine entsprechende Leitung zugeführt wird. Die Dosierpumpe fördert das Medium zu einem Auslassventil, z.B. in Form einer veränderbaren Düse, welche das Medium beispielsweise in Form einer kontinuierlichen Raupe auf einem Werkstück oder dergleichen ablegt.

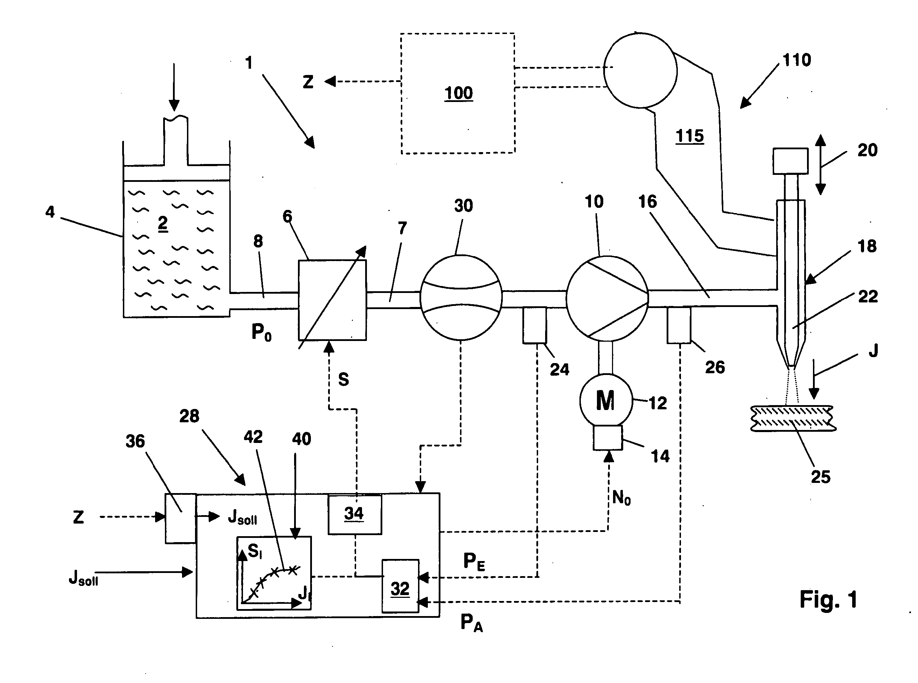

Das Dokument DE 69814532 T2 beschreibt eine Vorrichtung zur Steuerung einer Dosiereinrichtung für ein viskoses Fluid, bei der -wie in Fig. 1 gezeigt- zwei Drucksensoren stromaufwärts und stromabwärts einer Zahnradpumpe angeordnet sind, die über einen Schrittmotor angetrieben wird, um das über eine Versorgungsquelle und einen Druckreguliermechanismus zugeführte Medium über eine Ausstossdüse in einer dosierten Menge auszugeben. Der Druck des Mediums wird stromaufwärts der Zahnradpumpe durch den Druckreguliermechanismus in Abhängigkeit von den Signalen der Drucksensoren geregelt, die über einen Substraktionspunkt sowie einen Additionspunkt den Druck einer Druckluftversorgungsquelle über Luftdruckregulierungsmittel regulieren. derart, dass der Primarseitendruck und der Sekundärseitendruck im Wesentlichen gleich sind.

Bei den bekannten Dosiereinrichtungen ergibt sich das Problem, dass in Abhängigkeit vom Druck des Mediums stromaufwärts der Dosierpumpe und dem Druck des Mediums stromabwärts der Dosierpumpe - sowie auch in Abhängigkeit von der Größe des gerade geförderten Volumenstroms und der Viskosität des Mediums - in der Dosierpumpe ein Schlupf entsteht, der je nach Vordruck des zugeführten Mediums und ausgegebenem Volumenstrom sowie Pumpendrehzahl einen positiven oder auch einen negativen Wert annehmen kann. Dieser Schlupf führt bei den bekannten Dosiersystemen dazu, dass zwischen dem beispielsweise als Volumenstrom-Sollwert vorgegebenen theoretischen Fördervolumen pro Zeiteinheit bei einer vorgegebenen Drehzahl eine starke Abweichung zu dem tatsächlich aus dem Auslassventil austretenden Volumenstrom auftreten kann, die sich in der Regel nur durch eine sehr aufwändige Mess- und Regelungstechnik insbesondere unter Einsatz einer stromaufwärts der Dosierpumpe angeordneten Durchflussmesszelle vermeiden lässt. Zudem führt der Schlupf dazu, dass die Dosierpumpe einem erhöhten Verschleiß unterliegt.

Demgemäß ist es eine Aufgabe der vorliegenden Erfindung, ein Verfahren sowie eine Dosiereinrichtung zur Durchführung des Verfahrens zu schaffen, die die Nachteile des Standes der Technik vermeiden.

Eine weitere Aufgabe der vorgenannten Erfindung besteht darin, eine Dosiereinrichtung zu schaffen, die sich insbesondere in Verbindung mit einem Industrieroboter zur hochgenauen Dosierung eines flüssigen oder pasteusen Mediums einsetzen lässt, bzw. einen solchen Roboter zu schaffen, welcher auch bei hohen Verfahrgeschwindigkeiten eine hochpräzise Dosierung des Mediums ermöglicht.

Diese Aufgabe wird erfindungsgemäß durch die Merkmale von Anspruch 1, 10 und 13 gelöst.

Weitere Merkmale der Erfindung sind in den Unteransprüchen enthalten.

Gemäß der Erfindung wird bei einem Verfahren zur Steuerung einer Dosiereinrichtung zur hochpräzisen Dosierung eines flüssigen oder pasteusen Mediums das Medium über eine Zufuhreinrichtung, beispielsweise einen bekannten druckbeaufschlagten Vorratsbehälter, mit einem vorgegebenen Vordruck dem Einlass einer bekannten und durch einen vorzugsweise drehzahlgeregelten Antriebsmotor angetriebenen Dosierpumpe über ein zwischengeschaltetes Druckregulierventil zugeführt, das bevorzugt als Druckregelventil ausgestaltet ist, welches den Vordruck selbständig auf einen im Wesentlichen konstanten Wert regelt. Die Dosierpumpe fördert das Medium über ein geeignetes Leitungssystem zu einem bekannten Auslassventil, über welches das Medium als ein zeitlich veränderlicher Volumenstrom ausgegeben wird.

Das dem Druckregulierventil zugeführte Stellsignal wird im Wesentlichen zeitgleich mit dem Volumenstrom-Sollwert, bzw. dem dazu proportionalen Drehzahlsollwert verändert, wenn letzterer von einem momentanen Volumenstrom-Sollwert auf einen neuen Wert erhöht oder erniedrigt wird. Das Stellsignal, welches hierbei dem Druckregulierventil zugeführt wird, wird dabei in erfindungsgemäßer Weise bevorzugt auf Basis einer vorgegebenen Kennlinie ermittelt, die z.B. in einem elektronischen Speicher abgelegt ist. Die Kennlinie umfasst hierbei vorzugsweise Wertpaare von unterschiedlichen Volumenstrom-Sollwerten und diesen zugeordneten Werten für das dem Druckregulierventil zugeführte Stellsignal, bei denen sich ein Pumpenschlupf von null, bzw. mit der Größe des vorgegebenen Wertes einstellt.

Hierzu kann beispielsweise bei der ersten Inbetriebnahme einer erfindungsgemäßen Dosiereinrichtung zur Durchführung des Verfahrens ein erster Volumenstrom-Sollwert eingegeben werden und der Wert für das zugehörige Stellsignal, welches sich einstellt, wenn die Druckdifferenz zwischen den vom ersten Drucksensor und vom zweiten Drucksensor erfassten Druckwerten sich nach einiger Zeit auf einen Differenzwert von null eingestellt hat, im Speicher abgelegt werden. Durch wiederholtes Eingeben von weiteren Volumentrom-Sollwerten und Abspeichern der zugehörigen Werte für das Stellsignal lässt sich auf diese Weise empirisch eine entsprechende Kennlinie aufnehmen, abspeichern und auch mit weiteren Werten ergänzen. Weiterhin kann es vorgesehen sein, dass bereits in der Kennlinie enthaltene Wertepaare während des laufenden Betriebs der erfindungsgemäßen Dosiereinrichtung mit den aktuellen neuen Werten überschrieben werden, um hierdurch die Kennlinie ständig zu aktualisieren, und demgemäß die Zeitdauer zum Erreichen des neuen Volumenstrom-Sollwertes zu verkürzen.

Durch die Verwendung einer in der zuvor beschriebenen Weise erhaltenen Kennlinie oder gar eines Kennfeldes, bei welch letzterem z.B. zusätzlich auch ein Parameter für die Größe der Durchlassöffnung des Auslassventils mit berücksichtigt werden kann, stellt sich der aus dem Auslassventil austretende Volumenstrom in einer erheblich kürzeren Zeit und mit einer wesentlich höheren Genauigkeit auf den gewünschten neuen Volumenstrom-Sollwert ein. Hierdurch eröffnet sich die Möglichkeit, eine nach dem erfindungsgemäßen Verfahren arbeitende Dosiereinrichtung in Verbindung mit einem bekannten Industrieroboter zur hochgenauen Dosierung des flüssigen oder pasteusen Mediums einzusetzen, bei welchem die Robotersteuerung in kurzen Zeitabständen und ohne Vorlaufzeit Signale für die momentane Verfahrgeschwindigkeit und/oder Position des Roboters vorgibt, aus denen z.B. eine in der elektronischen Steuerungs- und Regelungseinrichtung der erfindungsgemäßen Dosiereinrichtung enthaltene Konvertierungseinheit die zugehörigen Volumenstrom-Sollwerte errechnet.

Über einen stromaufwärts der Dosierpumpe vorzugsweise im Bereich des Einlasses der Dosierpumpe angeordneten ersten Drucksensor wird der Druck des Mediums und ein damit verbundener erster Druckwert erfasst. Im Wesentlichen gleichzeitig hierzu wird der Druck des Mediums, bzw. ein diesem zugeordneter zweiter Druckwert mittels eines zweiten Drucksensors erfasst, der stromabwärts der Dosierpumpe, vorzugsweise in deren Auslassbereich, angeordnet ist. Die beiden Druckwerte werden anschließend miteinander verglichen, und in Abhängigkeit von der zwischen den beiden Druckwerten bestehenden Differenz das Druckregulierventil in der Weise geöffnet oder geschlossen, dass die Differenz aus dem ersten Druckwert und dem zweiten Druckwert einen vorgegebenen Wert annimmt, der bevorzugt einem Differenzdruck des Mediums in der Zuleitung stromaufwärts und stromabwärts der Dosierpumpe von null bar entspricht.

Anders ausgedrückt wird bei dem erfindungsgemäßen Verfahren durch Messen und Vergleichen des Drucks stromaufwärts und stromabwärts der Dosierpumpe das Druckregulierventil in der Weise gesteuert, dass der Pumpenschlupf der Dosierpumpe bevorzugt einen Wert von null besitzt, obgleich es gewünschtenfalls auch vorgesehen sein kann, dass die Differenz aus dem ersten Druckwert und dem zweiten Druckwert einen von null verschiedenen Wert annimmt, der vorzugsweise jedoch nur geringfügig größer oder kleiner ist.

Durch den Einsatz des erfindungsgemäßen Verfahrens ergibt sich der Vorteil, dass infolge des vernachlässigbaren Pumpenschlupfs die Drehzahl des die Dosierpumpe antreibenden Antriebsmotors im Wesentlichen proportional zu dem von der Dosierpumpe geförderten Volumenstrom ist. Dies wiederum führt dazu, das sich der Volumenstrom sehr einfach auf einen neuen Volumenstrom-Sollwert erhöhen oder erniedrigen lässt, indem die Drehzahl des Antriebsmotors auf den entsprechenden proportionalen Drehzahlwert erhöht wird oder erniedrigt wird.

Das erfindungsgemäße Verfahren sowie die zugehörige erfindungsgemäße Dosiereinrichtung werden nachfolgend mit Bezug auf die Zeichnungen anhand einer bevorzugten Ausführungsform beschrieben.

In der Zeichnung zeigt:
- Fig. 1: eine schematische Darstellung einer erfindungsgemäßen Dosiereinrichtung, die am Arm eines lediglich teilweise angedeuteten Industrieroboters auf- genommen ist.

Wie in Fig. 1 gezeigt ist, umfasst eine erfindungsgemäße Dosiereinrichtung 1 zur Feindosierung eines pasteusen oder flüssigen Mediums 2, welches über eine Zufuhreinrichtung in Form eines druckbeaufschlagten Vorratsbehälters 4 mit einem Vordruck P₀ bereitgestellt wird, ein Druckregulierventil 6, welches mit dem Vorratsbehälter 4 über eine Zuleitung 8 strömungsmäßig verbunden ist.

Die Dosiereinrichtung 1 weist ferner eine mit dem Auslass des Druckregulierventils 6 über eine Zuleitung 7 strömungsmäßig verbundene Dosierpumpe 10 auf, die durch einen Elektromotor 12 mit einem vorgeschalteten Drehzahlregler 14 angetrieben wird. Die Dosierpumpe 10 ist auslasseitig über eine Zuleitung 16 strömungsmäßig mit einem Auslassventil 18 verbunden, welches bei der in Fig. 1 gezeigten Ausführungsform der Erfindung beispielhaft als ein Nadelventil ausgestaltet ist, dessen Öffnungsquerschnitt sich über eine in Richtung des Pfeils 20 bewegbare Nadel 22 verändern lässt, um die Größe des aus dem Auslassventil 18 heraus auf ein Werkstück 25 abgegebenen Volumenstromes J an den Vordruck P₀, im Vorratsbehälter 4, bzw. den Arbeitspunkt der Dosierpumpe 10 anpassen zu können. Der Volumenstrom J, d.h. das pro Zeiteinheit austretende Volumen des Mediums 2 ist in Fig. 1 symbolisch durch den Pfeil im Bereich des Auslassventils 18 angedeutet.

Wie der Darstellung von Fig. 1 weiterhin entnommen werden kann, sind stromaufwärts der Dosierpumpe 10 ein erster Drucksensor 24 und stromabwärts derselben ein zweiter Drucksensor 26 angeordnet, die jeweils in Strömungsverbindung mit dem Inneren der zugehörigen Zuleitungen 7 und 16 stehen, und die einen dem Druck des Mediums 2 entsprechenden ersten eingangsseitigen Druckwert P_{E} und zweiten ausgangsseitigen Druckwert P_{A} bereitstellen.

Der erste und zweite Druckwert P_{E} und P_{A} werden über nicht näher bezeichnete Zuleitungen einer vorzugsweise elektronischen Steuerungs- und Regelungseinrichtung 28 zugeführt, welche ebenfalls über entsprechende, in gestrichelten Linien eingezeichnete elektrische Leitungen mit dem als Druckregelventil ausgestalteten Druckregulierventil 6, dem Drehzahlregler 14 des Antriebsmotors 12 und einer optionalen Durchflussmesszelle 30 verbunden ist, welch letztere den Volumenstrom J zur Vermeidung von systematischen Messfehlern beim Betrieb der Dosiereinrichtung 1 zusätzlich erfassen kann.

Wie die Figur 1 weiterhin zeigt, enthält die Steuerungs- und Regelungseinrichtung 28 eine Vergleichseinheit 32, die die Größe des ersten und zweiten Druckwerts P_{E} und P_{A} miteinander vergleicht, und die das Ergebnis des Vergleichs einer in der Steuerungs- und Regelungseinrichtung 28 ebenfalls enthaltenen Steuerungseinheit 34 zuführt, die das dem Druckregulierventil 6 zugeführte Stellsignal S daraufhin um einen bestimmten Betrag solange erhöht, bis die Differenz aus dem ersten Druckwert und dem zweiten Druckwert einem vorgegebenen Wert, insbesondere null, entspricht, wenn der erste Druckwert P_{E} kleiner ist als der zweite Druckwert P_{A}.

In gleicher Weise verringert die Steuereinheit 34 das dem Druckregulierventil 6 zugeführte Stellsignal S um einen bestimmten, vorzugsweise wählbaren Betrag solange bis der erste Druckwert P_{E} z.B. dem zweiten Druckwert P_{A} entspricht, wenn der erste Druckwert P_{E} größer als der zweite Druckwert P_{A} ist, um den Schlupf der Dosierpumpe 10 zu eliminieren.

Wie der Darstellung von Fig. 1 weiterhin entnommen werden kann, wird der Steuerungs- und Regelungseinrichtung 28 entweder über nicht näher gezeigte Eingabemittel wie z.B. einem Potentiometer oder dergleichen, oder aber bevorzugt über die in gestrichelten Linien angedeutete elektronische Steuerungseinrichtung 100 eines Roboters 110 - von welchem lediglich der das Auslassventil 18 führende Arm 115 dargestellt ist - ein Signal Z zugeführt, welches je nach Position und Geschwindigkeit des Roboter 110 zeitlich veränderlich ist, und auf dessen Basis eine vorgeschaltete oder in der Steuerungs- und Regelungseinrichtung 28 enthaltne Konvertierungseinheit 36 den Volumenstrom-Sollwert Jₛₒₗₗ generiert.

Die Steuerungs- und Regelungseinrichtung 28 enthält einen vorzugsweise digitalen Speicher 40, in welchem Wertepaare von unterschiedlichen Volumenstromwerten oder Volumenstrom-Sollwerten Jᵢ und diesen zugeordneten Werten Sᵢ für das Stellsignal S abgelegt sind, bei denen die Differenz aus dem ersten und zweiten Druckwert P_{E} und Pₐ dem vorgegebenen Wert, insbesondere null, entspricht. Die Wertepaare sind dabei bevorzugt in Form einer Kennlinie 42 abgelegt, wie dies in Fig. 1 schematisch durch die Kreuze angedeutet ist.

Um eine möglichst schnelle Anpassung des aus dem Auslassventil 28 austretenden Ist-Volumenstromes J an den der Steuerungs- und Regelungseinrichtung 28 zugeführten neuen Volumenstrom-Sollwert Jₛₒₗₗ zu erhalten liest die Steuerungseinheit 34 den dem neuen Volumenstrom-Sollwert Jₛₒₗₗ entsprechenden abgespeicherten Wert für den Volumenstrom Jᵢ zusammen mit dem zugehörigen Wert Sᵢ aus dem Speicher 34 aus, und führt diesen sowie einen zum neuen Volumenstrom-Sollwert Jₛₒₗₗ aufgrund des fehlenden Pumpenschlupfs proportionalen Drehzahlsollwert Nₛₒₗₗ vorzugsweise gleichzeitig entsprechend dem Druckregulierventil 6 und dem Drehzahlregler 14 zu.

## Patentansprüche

1. Verfahren zur Steuerung einer Dosiereinrichtung (1) für ein flüssiges oder pasteuses Medium (2), in der das Medium über eine Zufuhreinrichtung (4) mit einem vorgegebenen Vordruck und ein dieser strömungsmäßig nachgeordnetes Druckregulierventil (6) einer durch einen Antriebsmotor (12) mit einer vorgegebenen Drehzahl angetriebenen Dosierpumpe (10) insbesondere einer Zahnradpumpe, zugeführt wird, die das Medium zu einem Auslassventil (18) fördert, über welches das Medium als ein zeitlich veränderlicher Volumenstrom ausgegeben wird, ein erster Druckwert des Mediums stromaufwärts der Dosierpumpe (10) und ein zweiter Druckwert des Mediums stromabwärts der Dosierpumpe (10) erfasst wird, der erste und der zweite Druckwert verglichen werden und die Stellung des Druckregulierventils (6) durch Zuführen eines Stellsignals in Abhängigkeit von einem vorgegebenen Volumenstrom-Sollwert in der Weise verändert wird, dass die Differenz aus dem ersten Druckwert und dem zweiten Druckwert einen vorgegebenen Wert annimmt,
**dadurch gekennzeichnet, dass**
Wertepaare von unterschiedlichen Volumenstrom-Sollwerten und diesen zugeordneten Werten für das Stellsignal, bei denen die Differenz aus dem ersten und dem zweiten Druckwert dem vorgegebenen Wert entspricht, in Form einer Kennlinie (42) in einem Speicher (40) abgelegt werden.

2. Verfahren nach Anspruch 1,
**dadurch gekennzeichnet, dass**
der vorgegeben Wert für die Differenz des ersten und zweiten Druckwerts einer Druckdifferenz des Mediums stromaufwärts und stromabwärts der Dosierpumpe (10) von null bar entspricht.

3. Verfahren nach einem der vorhergehenden Ansprüche,
**dadurch gekennzeichnet, dass**
die Drehzahl des Antriebsmotors (12) in Abhängigkeit von einem Volumenstrom-Sollwert veränderbar ist, und dass ein dem Druckregulierventil (6) zugeführtes Stellsignal im Wesentlichen zeitgleich mit dem Volumenstrom-Sollwert auf Basis der Kennlinie (42) verändert wird.

4. Verfahren nach einem der vorhergehenden Ansprüche,
**dadurch gekennzeichnet, dass**
die Kennlinie (42) auf empirischem Wege ermittelt wird.

5. Verfahren nach einem der vorhergehenden Ansprüche,
**dadurch gekennzeichnet, dass**
die Kennlinie (42) bei einem in der Kennlinie nicht enthaltenden Wertepaar für einen Volumenstrom-Sollwert selbständig ergänzt wird.

6. Verfahren nach einem der vorhergehenden Ansprüche,
**dadurch gekennzeichnet, dass**
die Wertepaare und/oder die den Volumenstrom-Sollwerten der Kennlinie (42) zugeordneten Werte für das Stellsignal zur Aktualisierung der Kennlinie während des laufenden Betriebs der Dosiereinrichtung (1) durch neu erhaltene Werte ersetzt werden.

7. Verfahren nach einem der vorhergehenden Ansprüche,
**dadurch gekennzeichnet, dass**
die Kennlinie zwischen zwei Wertepaaren durch Interpolation ergänzt wird.

8. Verfahren nach einem der vorhergehenden Ansprüche,
**dadurch gekennzeichnet, dass**
das Druckregulierventil (6) ein Druckregelventil ist, welches nach Art einer Hilfsregelungseinrichtung den Vordruck bei Schwankungen des Drucks in der Zufuhreinrichtung (4) selbständig auf einen im Wesentlichen konstanten Wert regelt.

9. Verfahren nach einem der vorhergehenden Ansprüche,
**dadurch gekennzeichnet, dass**
der Volumenstrom des Mediums zur Realisierung einer hohen Prozesssicherheit zusätzlich durch eine stromaufwärts der Dosierpumpe (10) vorgesehene Durchflussmesszelle erfasst wird.

10. Dosiereinrichtung (1) zur Durchführung des Verfahrens nach einem der vorhergehenden Ansprüche, mit einer Zufuhreinrichtung (4) für ein flüssiges oder pasteuses Medium (2), welche das Medium mit einem vorgegebenen Vordruck (Pₒ) bereitstellt, einem mit der Zufuhreinrichtung (4) strömungsmäßig verbundenen Druckregulierventil (6), einer mit dem Druckregulierventil (6) strömungsmäßig verbundenen Dosierpumpe (10), insbesondere Zahnradpumpe, einem die Dosierpumpe (10) antreibenden Antriebsmotor (12), einem mit der Dosierpumpe (10) strömungsmäßig verbundenen Auslassventil (18), über welches das Medium (2) als ein zeitlich veränderbarer Volumenstrom (J) ausgegeben wird, mit einer Steuerungs- und Regelungseinrichtung (28), welche dem Druckregulierventil (6) in Abhängigkeit von einem vorgegebenen Volumenstrom-Sollwert (Jₛₒₗₗ) ein Stellsignal (S) zuführt, mit einem ersten, den eingangsseitigen Druck (P_{E}) des Mediums (2) stromaufwärts der Dosierpumpe (10) erfassenden Drucksensor (24), einem zweiten, den ausgangsseitigen Druck (P_{A}) des Mediums (2) stromabwärts der Dosierpumpe (10) erfassenden Drucksensor (26), einer in der Steuerungs- und Regelungseinrichtung (28) enthaltenen Vergleichseinheit (32), welche die vom ersten und zweiten Drucksensor (26, 28) erfassten Druckwerte (P_{E}, P_{A}) miteinander vergleicht, sowie einer in der Steuerungs- und Regelungseinrichtung (28) enthaltenen Steuerungseinheit (34), die das dem Druckregulierventil (6) zugeführte Stellsignal (S) in der Weise verändert, dass die Differenz aus dem ersten Druckwert (P_{E}) und dem zweiten Druckwert (P_{A}) einem vorgegebenen Wert, insbesondere null, entspricht,
**dadurch gekennzeichnet, dass**
die Steuerungs- und Regelungseinrichtung (28) einen Speicher (42) enthält, in welchem Wertepaare von unterschiedlichen Volumenstrom-Sollwerten (Jᵢ) und diesen zugeordneten Werten für das Stellsignal (Sᵢ), bei denen die Differenz (P_{E} - P_{A}) aus dem ersten und zweiten Druckwert (P_{E}, P_{A}) dem vorgegebenen Wert entspricht, in Form einer Kennlinie (42) abgelegt sind.

11. Dosiereinrichtung nach Anspruch 11,
**dadurch gekennzeichnet, dass**
der Antriebsmotor (12) mit einem Drehzahlregler (14) versehen ist, und dass die Steuereungs- und Regelungseinrichtung (28) dem Drehzahlregler einen dem Volumenstrom-Sollwert (Jₛₒₗₗ) zugeordneten Drehzahl-Sollwert (Nₛₒₗₗ) zuführt.

12. Dosiereinrichtung nach Anspruch 10 oder 11,
**dadurch gekennzeichnet, dass**
die Steuerungs- und Regelungseinrichtung (28) bei Eingabe eines neuen Volumenstrom-Sollwerts (Jₛₒₗₗ) das zugehörige Stellsignal (S) sowie den dem geänderten Volumenstrom-Sollwert entsprechenden Drehzahl-Sollwert (Nₛₒₗₗ) dem Druckregulierventil (6) und dem Drehzahlregler (14) entsprechend im Wesentlichen zeitgleich zuführt.

13. Industrieroboter (110), insbesondere zum Auftrag von Klebstoff oder Dichtmaterial, enthaltend eine Dosiereinrichtung nach einem der Ansprüche 10 bis 12,
**dadurch gekennzeichnet, dass**
der der Steuerungs- und Regelungseinrichtung (28) zugeführte Volumenstrom-Sollwert (Jₛₒₗₗ) auf Basis eines von der Steuerungseinrichtung (100) des Roboters (110) bereitgestellten positions- und/oder geschwindigkeitsabhängigen Signals (Z) erzeugt wird.

## Claims

1. Process for the control of a dispensing system *(1)* for a fluid or paste-like medium *(2)*, in which the medium is fed through a feed system *(4)* with a predefined pressure and a pressure regulation valve *(6)* located downstream of said feed system, a dispensing pump *(10)*, especially a gear pump, driven at a predefined rotational speed by a drive motor, which pump conveys the medium to an outlet valve *(18)*, through which the medium is expressed as a volume flow that changes over time, a first pressure value of the medium upstream of the dispensing pump *(10)* and a second pressure value of the medium downstream of the dispensing pump *(10)* are recorded, the first and second pressure values are compared and the position of the pressure regulation valve *(6)* changed by application of an adjustment signal depending on a predefined volume flow set value in such a way that the difference between the first pressure value and the second pressure value taken on a predefined value, ***characterized by** the fact that* value pairs from different volume flow set values and the values for the adjustment signal assigned to them in which the difference between the first and second pressure values corresponds to the predefined value are stored in a storage *(40)* in the form of a characteristic curve *(42)*.

2. Process according to Claim 1, **characterized by** the fact that the predefined value for the difference between the first and second pressure values corresponds to a pressure difference in the medium upstream and downstream of the dispensing pump *(10)* of zero bar.

3. Process according to one of the foregoing claims, **characterized by** the fact that the rotational speed of the drive motor *(12)* can be changed depending on a volume flow set value, and that an adjustment signal applied to the pressure regulation valve *(6)* is changed largely simultaneously with the volume flow set value based on the characteristic curve *(42)*.

4. Process according to one of the foregoing claims, **characterized by** the fact that the characteristic curve *(42)* is determined in an empirical manner.

5. Process according to one of the foregoing claims, **characterized by** the fact that the characteristic curve *(42)* is independently extended with a value pair not present in the characteristic curve for a volume flow set value.

6. Process according to one of the foregoing claims, **characterized by** the fact that the value pairs and/or the values for the adjustment signal assigned to the volume flow set values of the characteristic curve *(42)* are replaced by newly obtained values to update the characteristic curve during ongoing operation of the dispensing system *(1)*.

7. Process according to one of the foregoing claims, **characterized by** the fact that the characteristic curve is completed between two value pairs using interpolation.

8. Process according to one of the foregoing claims, **characterized by** the fact that the pressure regulation valve *(6)* is a pressure regulator valve, which works as an auxiliary regulation system to regulate the pressure independently to a largely constant value in case of variations in the pressure in the feed system *(4)*.

9. Process according to one of the foregoing claims, **characterized by** the fact that the volume flow of the medium is also recorded by means of a flow measurement cell located upstream of the dispensing pump *(10)* in order to implement greater process reliability.

10. Dispensing system (1) for execution of the process according to one of the foregoing claims, having a feed system (4) for a liquid or paste-like medium (2) which provides the medium at a predefined pressure (P₀), a pressure regulation valve (6) connected in the line of flow to the feed system (4), a dispensing pump (10) connected in the line of flow to the pressure regulation valve (6), particularly a gear pump, a drive motor (12) driving the dispensing pump (10), an outlet valve (18) connected in the line of flow to the dispensing pump (10), through which the medium (2) is ejected as a volume flow (J) that changes over time, with a control and regulation system (28) which feeds an adjustment signal (S) to the pressure regulation valve (6) depending on a predefined volume flow set value (Jₛₑₜ), with a first pressure sensor (24) recording the input side pressure (P_{E}) of the medium (2) upstream of the dispensing pump (10), a second pressure sensor (26) recording the output side pressure (P_{A}) of the medium (2) downstream of the dispensing pump (10), a comparator unit (32) contained within the control and regulation system (28) which compares the pressure values (P_{E}, P_{A}) recorded by the first and second pressure sensors (26, 28), and a control unit (24) contained within the control and regulation system (28) which changes the adjustment signal (S) applied to the pressure regulation valve (6) in such a way that the difference between the first pressure value (P_{E}) and the second pressure value (P_{A}) corresponds to a predefined value, particularly zero, ***characterized by** the fact that* the control and regulation system (28) contains a storage (42) in which value pairs of different volume flow set values (Jᵢ) and values for the adjustment signal (Sᵢ) assigned to them, in which the difference (P_{E} - P_{A}) between the first and second pressure values (P_{E}, P_{A}) corresponding to the predefined value are stored in the form of a characteristic curve (42).

11. Dispensing system according to Claim 11, **characterized by** the fact that the drive motor (12) is equipped with a rotational speed regulator (14) and that the control and regulation system (28) feeds the rotational speed regulator a rotational speed set value (Nₛₑₜ) assigned to the volume flow set value (Jₛₑₜ).

12. Dispensing system according to Claims 10 or 11, **characterized by** the fact that the control and regulation system (28), upon input of a new volume flow set value (Jₛₑₜ), sends the associated adjustment signal (S) and the changed rotational speed set value (Nₛₑₜ) corresponding to the changed volume flow set value to the pressure regulation valve (6) and the rotational speed regulator (14), correspondingly largely simultaneously.

13. Industrial robot (1), particularly for the application of glue or sealant, including a dispensing system according to one of Claims 10 through 12, **characterized by** the fact that the volume set value (Jₛₑₜ) input to the control and regulation system (28) is generated based on a position- and/or speed-dependent signal (Z) provided by the control system (100) of the robot (110).

## Revendications

1. Procédé pour commander un dispositif de dosage (1) pour un milieu (2) liquide ou pâteux dans lequel le milieu est amené au moyen d'un dispositif d'alimentation (4) avec une pression initiale prédéfinie et d'une vanne de régulation de pression (6), disposée en aval de ce dispositif au niveau de l'écoulement, à une pompe de dosage (10) entraînée par un moteur d'entraînement (12) avec un régime prédéfini, en particulier une pompe à engrenages, laquelle transporte le milieu vers une vanne de sortie (18), par laquelle le fluide est délivré sous la forme d'un flux volumique variable dans le temps, une première valeur de pression du milieu en amont de la pompe de dosage (10) et une seconde valeur de pression du milieu en aval de la pompe de dosage (10) étant enregistrées, la première et la seconde valeur de pression étant comparées et la position de la vanne de régulation de pression (6) étant modifiée par l'arrivée d'un signal de réglage en fonction d'une valeur de consigne de flux volumique prédéfinie en ce sens que la différence résultant de la première valeur de pression et de la seconde valeur de pression prend une valeur prédéfinie,
**caractérisé en ce que**
des paires de différentes valeurs de consigne de flux volumique et de valeurs attribuées à ces premières valeurs pour le signal de réglage, pour lesquelles la différence entre la première et la seconde valeur correspond à la valeur prédéfinie, sont déposées sous la forme d'une courbe caractéristique (42) dans une mémoire (40).

2. Procédé selon la revendication 1,
**caractérisé en ce que**
la valeur prédéfinie pour la différence de la première et de la seconde valeur de pression correspond à une différence de pression du milieu en amont et en aval des pompes de dosage (10) de zéro bar.

3. Procédé selon l'une quelconque des revendications précédentes,
**caractérisé en ce que**
le régime du moteur d'entraînement (12) est modifiable en fonction d'une valeur de consigne de flux volumique, et **en ce qu'**un signal de réglage amenée à la vanne de régulation de pression (6) est modifié de façon sensiblement simultanée avec la valeur de consigne de flux volumique sur la base de la courbe caractéristique (42).

4. Procédé selon l'une quelconque des revendications précédentes,
**caractérisé en ce que**
la courbe caractéristique (42) est déterminée par voie empirique.

5. Procédé selon l'une quelconque des revendications précédentes,
**caractérisé en ce que**
la courbe caractéristique (42) est complétée de façon indépendante dans le cas d'une paire de valeurs non incluse dans la courbe caractéristique pour une valeur de consigne de flux volumique.

6. Procédé selon l'une quelconque des revendications précédentes,
**caractérisé en ce que**
les paires de valeurs et/ou les valeurs attribuées aux valeurs de consigne de flux volumique de la courbe caractéristique (42) pour le signal de réglage sont remplacées par de nouvelles valeurs obtenues pour la mise à jour de la courbe caractéristique pendant le fonctionnement en cours du dispositif de dosage (1).

7. Procédé selon l'une quelconque des revendications précédentes,
**caractérisé en ce que**
la courbe caractéristique entre deux paires de valeurs est complétée par interpolation.

8. Procédé selon l'une quelconque des revendications précédentes,
**caractérisé en ce que**
la vanne de régulation de pression (6) est une vanne de réglage de pression qui, à la façon d'un dispositif de réglage auxiliaire, règle la pression initiale en cas de variations de la pression dans le dispositif d'alimentation (4) de façon indépendante sur une valeur sensiblement constante.

9. Procédé selon l'une quelconque des revendications précédentes,
**caractérisé en ce que**
le flux volumique du milieu est enregistré en supplément par une cellule de mesure de débit prévue en amont de la pompe de dosage (10) pour la réalisation d'une sécurité de processus élevée.

10. Dispositif de dosage (1) pour mettre en oeuvre le procédé selon l'une quelconque des revendications précédentes, comprenant un dispositif d'alimentation (4) pour un milieu (2) liquide ou pâteux, lequel dispositif fournit le milieu avec une pression initiale (P₀) prédéfinie, une vanne de régulation de pression (6) reliée au dispositif d'alimentation (4) au niveau de l'écoulement, une pompe de dosage (10) reliée au niveau de l'écoulement à la vanne de régulation de pression (6), en particulier une pompe à engrenages, un moteur d'entraînement (12) entraînant la pompe de dosage (10), une vanne de sortie (18) reliée au niveau de l'écoulement à la pompe de dosage (10), par laquelle le milieu (2) est délivré sous forme d'un flux volumique (J) variable dans le temps, un dispositif de commande et/ou de réglage (28), qui amène un signal de réglage (S) à la vanne de régulation de pression (6) en fonction d'une valeur de consigne de flux volumique (Jₛₒₗₗ) prédéfinie, avec un premier capteur de pression (24) enregistrant la pression (P_{E}) côté entrée du milieu (2) en amont de la pompe de dosage (10), un second capteur de pression (26) enregistrant la pression (P_{A}) côté sortie du milieu (2) en aval de la pompe de dosage (10), une unité de comparaison (32) incluse dans le dispositif de commande et de réglage (28), laquelle compare les valeurs de pression (P_{E}, P_{A}) enregistrées par le premier et le second capteur de pression (26, 28), et une unité de commande (34) incluse dans le dispositif de commande et de réglage (28), laquelle modifie le signal de réglage (S) amené à la vanne de régulation de pression (6) en ce sens que la différence résultant de la première valeur de pression (P_{E}) et de la seconde valeur de pression (P_{A}) correspond à une valeur prédéfinie, en particulier zéro,
**caractérisé en ce que**
le dispositif de commande et de réglage (28) contient une mémoire (42) dans laquelle des paires de valeurs de différentes valeurs de consigne de flux volumique (Jᵢ) et de valeurs attribuées à ces premières valeurs pour le signal de réglage (Sᵢ), pour lesquelles la différence (P_{E} - P_{A}) résultant de la première et de la seconde valeur de pression (P_{E}, P_{A}) correspond à la valeur prédéfinie, sont déposées sous la forme d'une courbe caractéristique (42).

11. Dispositif de dosage selon la revendication 10,
**caractérisé en ce que**
le moteur d'entraînement (12) est doté d'un régulateur de régime (14), et **en ce que** le dispositif de commande et de réglage (28) amène au régulateur de régime une valeur de consigne de régime (Nₛₒₗₗ) attribuée à la valeur de consigne de flux volumique (Jₛₒₗₗ).

12. Dispositif de dosage selon la revendication 10 ou 11,
**caractérisé en ce que**
le dispositif de commande et de réglage (28) amène de façon appropriée et sensiblement simultanée, lors de l'entrée d'une nouvelle valeur de consigne de flux volumique (Jₛₒₗₗ), le signal de réglage (S) spécifique ainsi que la valeur de consigne de régime (Nₛₒₗₗ) correspondant à la valeur de consigne de flux volumique modifiée à la vanne de régulation de pression (6) et au régulateur de régime (14).

13. Robot industriel (110), en particulier pour l'application de colle ou de matériau d'étanchéité, contenant un dispositif de dosage selon l'une quelconque des revendications 10 à 12,
**caractérisé en ce que**
la valeur de consigne de flux volumique (Jₛₒₗₗ) amenée au dispositif de commande et de réglage (28) est générée sur la base d'un signal (Z) dépendant de la position et/ou de la vitesse et fourni par le dispositif de commande (100) du robot (110).
